(19) **Europäisches Patentamt**

**European Patent Office**

**Office européen des brevets**

(11) Numéro de publication: **0 187 065 B1**

(12) **FASCICULE DE BREVET EUROPEEN**

(45) Date de publication de fascicule du brevet: **29.04.92**

(51) Int. Cl.5: **G06F 15/72**

(21) Numéro de dépôt: **85402288.6**

(22) Date de dépôt: **25.11.85**

(54) **Système pour l'aide à la création et à l'industrialisation d'objets obtenus par découpe et déformation à partir de métaux en feuille.**

(30) Priorité: **30.11.84 FR 8418276**

(43) Date de publication de la demande:
**09.07.86 Bulletin 86/28**

(45) Mention de la délivrance du brevet:
**29.04.92 Bulletin 92/18**

(84) Etats contractants désignés:
**DE FR GB IT**

(56) Documents cités:

**MECANIOUE MATERIEUX ELECTRICITE, no. 403, janvier-février 1984, pages 28-41, Paris, FR; Ph. FORESTIER: "Catia"**

**MACHINE DESIGN, vol. 55, no. 27, 24 novembre 1983, pages 50-55, Cleveland, Ohio, US; L.R. MINARDI: "CAD turns to surface modeling"**

**ENGINEERING, vol. 222, no. 10, octobre 1982, pages VI-VII, Londres, GB; S. PASS: "Sesam"**

(73) Titulaire: **TELEMECANIOUE**
**43-45, Boulevard Franklin Roosevelt**
**F-92504 Rueil-Malmaison Cedex(FR)**

(72) Inventeur: **Vedrenne, Robert**
**97, bd. du Maréchal Delattre de Tassigny**
**F-92150 Suresnes(FR)**
Inventeur: **Henry, Jean-Paul**
**12, avenue Taillevent**
**F-78100 Saint Germain en Laye(FR)**

(74) Mandataire: **Marquer, Francis et al**
**CABINET MOUTARD 35, avenue Victor Hugo**
**Résidence Champfleury**
**F-78180 Voisins-le-Bretonneux(FR)**

Rank Xerox (UK) Business Services
(-/2.17/2.0)

## Description

La présente invention concerne un procédé pour l'aide à la conception et à l'industrialisation d'objets obtenus par découpe et déformation à partir de métaux en feuille. Ces objets peuvent notamment rentrer dans la constitution d'un produit et présenter en conséquence au moins une partie des fonctionnalités de ce produit.

D'une manière générale, on sait que la réalisation d'objets de ce genre s'obtient en soumettant le métal en feuille en une série de transformations obtenues par découpage et formage qui seront réalisés en une ou plusieurs opérations telles que détourages (obtention du flan), pliages, vrillages, emboutis, cisaillages, marquages, gravures, frappes diverses, formation de soyés taraudes ou non, de nervures, etc..., jusqu'à ce que l'on obtienne la forme définitive de l'objet.

L'objet peut être alors défini par une pluralité d'éléments liés les uns aux autres par leur prolongement naturel, ces éléments étant issus de transformations spécifiques obtenues à l'aide d'un outillage.

Il est clair que dans le cadre d'une fabrication de série, ces opérations doivent s'effectuer selon une séquence pré-établie au moyen d'outillages automatiques ou semi-automatiques spécialement conçus en fonction des formes à réaliser et des propriétés de déformabilité des métaux utilisés.

En conséquence, au moment de la création d'un nouvel objet, le concepteur de cet objet, outre le problème technique qu'il a à traiter et, en particulier, la définition d'une géométrie adaptée aux diverses fonctions du produit permettant de résoudre ce problème, devra tenir compte, pour chacune de ces opérations, des possibilités de l'outillage utilisé et des limites de déformabilité du matériau.

Le processus de conception et d'industrialisation de l'objet comprend donc habituellement au moins la séquence suivante :

- la définition de la géométrie et des fonctions spécifiques de l'objet ;
- la définition des formes du flan à partir duquel sera réalisé l'objet et, éventuellement ;
- l'optimalisation du positionnement de ce flan dans la bande en vue de réduire autant que possible la consommation de matière, et celle des conditions économiques d'obtention de l'objet ;
- la définition de chacune des opérations à effectuer, à partir d'une bande pour obtenir cet objet et l'ordre le plus approprié pour exécuter ces opérations (gamme outil) ;
- la prise en compte et, éventuellement, la redéfinition de l'objet en fonction de la nature des opérations à effectuer, des limites de l'outillage utilisé pour réaliser ces opérations et des propriétés de déformabilité de la matière, cette redéfinition s'effectuant en suivant l'ordre préalablement établi ;
- la conception de l'outillage à utiliser.

Il s'avère en pratique que bien souvent, notamment dans le cas d'objets présentant des formes complexes, cette séquence doit être répétée plusieurs fois avant d'aboutir à la solution définitive.

A cet inconvénient s'ajoute le fait qu'à chaque fois le concepteur-projeteur de l'objet et de l'outillage nécessaire à sa fabrication doit réaliser une multiplicité de dessins de l'objet en deux dimensions qu'il doit interpréter en trois dimensions.

L'invention a donc plus particulièrement pour but de simplifier la tâche des concepteurs-projeteurs (objet et outillage), notamment en les dégageant de toutes les tâches fastidieuses de dessin, de relevé de cotes, de calcul, de génération des formes obtenues par déformations, de leur faciliter la recherche de la solution optimale et de vérifier la faisabilité des choix retenus, de manière à obtenir ainsi un gain de temps appréciable et une diminution notable du coût global de la conception, de l'industrialisation et de la fabrication de l'objet.

Pour parvenir à ce résultat, l'invention utilise nécessairement un matériel informatique comprenant un processeur doté d'un logiciel de conception assistée ainsi que des périphériques appropriés tels qu'écrans graphiques, clavier, traceurs, outils de dialogues, par exemple à photostyle ou à réticule.

D'une façon plus précise, le logiciel de conception assitée par ordinateur utilisé à cet effet doit permettre la modélisation, la mémorisation et la représentation tridimensionnelle d'un objet. Il doit permettre la conception de cet objet à partir, soit :

- d'un modèle fil de fer qui ne conserve que les coordonnées des sommets de l'objet modélisé ainsi que les arêtes joignant ces sommets,
- d'un modèle de type surfacique qui sera la base d'une génération volumique, ou
- d'un modèle "solide" ou "volumique" qui intègre le concept de matière.

Ces logiciels, tels que par exemple ceux qui se trouvent décrits dans la revue "Mécanique matériau électricité" n° 403, Janvier -Février 1984, pages 28 - 41, et la revue "Machine design, vol. 55, n° 27, 24 Novembre 1983, pages 50 - 55, doivent être adaptée pour permettre une modélisation de l'objet et sa génération par étapes successives au cours de sa conception , et comprendre par conséquent une base de données et une structure des données conçues de manière à pouvoir contenir, au moins :

- les propriétés relatives à la matière utilisée pour réaliser l'objet, par exemple son épaisseur, sa nature, ses propriétés de déformabilité, son coût, etc... ;
- les données et les propriétés relatives aux formes spécifiques qui ont été identifiées pour cette technique de fabrication, ainsi que les caractéristiques permettant les transformations géométriques, par exemple, à la génération de formes développées (du type pli, embouti, etc...), ou à la prise en compte des déformations du type ressaut issues des caractéristiques de la matière et du mode d'obtention ;
- les données du modèle de l'objet en cours de conception, au fur et à mesure de leur introduction, les données du modèle complet ou les données de modèles d'objets antérieurement conçus ;
- diverses données techniques de fabrication ou intéressant l'entreprise.

A cette base et à cette structure de données est associé un système de gestion permettant la mémorisation, la manipulation et l'extraction des caractéristiques et de la structure d'objets conçus ou en cours de conception, les actions accessibles pendant le processus pouvant par exemple être :

- des actions d'interactions, tant en entrée (entrée géométrique, désignation d'un objet, etc...) qu'en sortie (visualisation de l'objet ou d'une partie de l'objet en deux ou trois dimensions),
- des calculs divers tels que des calculs sur les transformations géométriques de la pièce, etc...,
- diverses gestions de l'information.

Or, il s'avère que dans l'état actuel de la technique, ces procédés de conception assistée par ordinateur sont plutôt des outils généraux d'aide au dessin ou de création d'objets purement géométriques que de véritables instruments d'aide à la conception réalisant la liaison entre une géométrie et les fonctions spécifiques qui définissent l'objet.

L'invention se propose donc d'adapter ces procédés en vue de les rendre spécifiques du type de fabrication précédemment mentionné et de permettre au concepteur de se concentrer plus particulièrement sur le problème technique posé qui est celui de la conception d'un ensemble géométrique et ses fonctions spécifiques, en le déchargeant en outre de problèmes technologiques, d'obtention de la pièce et du contrôle de faisabilité, et de lui apporter une aide à l'optimisation et/ou à l'évolution des solutions technico-économiques retenues.

Elle part de la constatation que la réalisation d'un objet du genre de celui précédemment mentionné ne fait intervenir qu'un nombre répertorié et limité d'éléments spécifiques.

Elle propose donc d'appliquer pour chacun de ces éléments spécifiques un procédé permettant, à partir des paramètres introduits par l'opérateur, de définir ces éléments et d'en vérifier la faisabilité. Ce procédé est conçu de manière à permettre la génération, l'intégration et la cohésion de ces éléments dans une structure originelle de l'objet compatible avec le processeur choisi. Le procédé donne en outre accès à des fonctionnalités permettant d'activer la génération dynamique des transformations géométriques des différentes déformations ainsi qu'à l'accès à des procédures particulières permettant des modifications, des visualisations, etc..., cette compatibilité de structure autorise ainsi le mixage entre les fonctionnalités particulières du procédé et celles du processeur de base. Bien entendu, à tout moment, cet ensemble d'éléments formant l'objet peut être unifié pour devenir un modèle géométrique tridimensionnel dans la structure du processeur de base.

L'opérateur peut donc générer le modèle de la pièce par ajout successif d'éléments, comme s'il réalisait la pièce par un assemblage de composants appropriés, cette génération pouvant s'effectuer indifféremment en fonction du contexte de création selon les deux états possibles de la pièce (Former ou Déformer).

D'une façon plus précise, le procédé pour l'aide à la conception et pour l'industrialisation d'objets obtenus par découpe et déformation d'un métal en feuille selon l'invention, fait intervenir, au moins :

- un processeur doté d'un logiciel de conception assistée à modélisation en trois dimensions ;
- un écran graphique sur lequel le processeur peut effectuer une représentation graphique d'un objet préalablement modélisé ou défini par l'opérateur ;
- des moyens de dialogue interactif entre le processeur et le concepteur qui permettent notamment à ce dernier d'introduire des données en mémoire, d'activer des fonctions spécifiques à réaliser par le processeur, d'effectuer sur l'écran le tracé d'un objet et d'en mémoriser le modèle de l'objet ainsi défini :
- une base de données utilisable par le processeur et incluant un système de gestion et une mémoire dans laquelle peuvent être mémorisés le modèle et la structure de fonctionnalités relatives à des éléments spécifiques rentrant dans la composition d'un objet du type susdit, et
- des moyens permettant l'élaboration progressive à l'écran de l'objet, par adjonctions successives d'extensions à un élément de base, ces moyens d'élaboration comportant des moyens de sélection de plusieurs modes opératoires différents.

Ce procédé est caractérisé en ce qu'il consiste à :

- à inclure préalablement dans la base de données le modèle et la structure des principaux types de déformations réalisées sur un métal en feuille en vue d'obtenir un objet du type susdit,
- à définir l'élément de base ainsi que les adjonctions en traçant à l'écran leurs contours en deux dimensions, à l'aide desdits moyens de dialogue ou en rappelant à l'écran ces contours dans le cas où il s'agit de contours dont le modèle est mémorisé dans le processeur,
- à effectuer les extensions à l'aide d'au moins les modes opératoires suivants, sélectionnés par lesdits moyens de sélection et au terme de chacun desquels le processeur effectue la génération, la modélisation et la visualisation en trois dimensions de l'ensemble unifié comprenant la partie de l'objet déjà élaborée et la dernière extension réalisée :

  1. un premier mode opératoire utilisable dans le cas où l'extension consiste en une adjonction sans déformation d'un élément, ce premier mode opératoire comprenant le tracé à l'écran par l'opérateur du contour de l'extension et la désignation de l'emplacement de sa liaison sur la partie de l'objet déjà élaborée ;

  2. un deuxième mode opératoire utilisable dans le cas où l'extension consiste en un élément obtenu par déformation, ce deuxième mode opératoire comprenant la définition à l'écran par l'opérateur du contour de l'extension soit à l'emplacement où elle doit se trouver sur l'objet, le système prenant alors en compte cet emplacement, soit en dehors de l'objet, l'opérateur indiquant alors l'emplacement de la jonction entre les deux éléments, la sélection par l'opérateur du type de déformation à effectuer et le calcul, la modélisation et le tracé à l'écran par le processeur, à l'aide des susdits éléments spécifiques mémorisés, de ladite déformation ;

  3. un troisième mode opératoire utilisable dans le cas où l'extension consiste en une adjonction d'un élément obtenu sans déformation devant être lié à l'objet par un élément obtenu par déformation, ce troisième mode opératoire comprenant le tracé à l'écran du contour de l'élément obtenu sans déformation, ce contour pouvant être tracé ou rappelé par l'opérateur, l'indication ou la prise en compte par le système de son emplacement, la définition des paramètres de ladite liaison, la génération, la modélisation et la visualisation de ladite adjonction étant réalisées par le système à l'aide des susdites fonctionnalités correspondant à ladite liaison ;

  4. un quatrième mode opératoire utilisable dans le cas où l'extension est un habillage, ce quatrième mode opératoire comprenant la sélection par l'opérateur du type de cet habillage, de sa position sur la pièce et de ses caractéristiques, les paramètres de cet habillage étant ensuite déterminés par le processeur.

D'une façon plus précise, et selon les caractéristiques de génération de la pièce, les modes opératoires précédemment mentionnés peuvent être exécutés à partir de différentes fonctions, à savoir notamment :

- un premier type dit de "CREATION" comprenant notamment la fonction de génération d'un premier élément de l'objet ou de l'objet lui-même si il ne comprend qu'un seul élément ("NEW-PIECE"), et/ou la fonction de génération d'un objet symétrique d'un objet déjà modélisé ("PIECE-SYM"), et/ou la fonction de génération par simple copie d'un objet déjà modélisé ("COPIE-PIECE"), et/ou la fonction de copie avec une matière présentant des caractéristiques différentes ("CHANGT-MAT"), et/ou la fonction de copie d'un objet déjà modélisé, avec une épaisseur différente ("CHANGT-EPS") ;
- un second type dit d'extension ("EXTENSION PIECE") utilisant les susdits éléments identifiés et pouvant comprendre :

  . une fonction permettant d'ajouter un pli plus un contour d'un objet ("CONT+PLI"), et/ou

  . une fonction permettant d'ajouter une vrille plus un contour à la pièce ("CONT+VRI"), et/ou

  . une fonction permettant d'ajouter à la pièce un pli de forme rectangulaire ou trapézoïdale ("PLI"), et/ou

  . une fonction permettant d'ajouter à la pièce une vrille de forme rectangulaire ou trapézoïdale ("VRILLE"), et/ou

  . une fonction permettant d'ajouter à la pièce un contour ("CONTOUR"), et/ou

  . une fonction permettant de relier par un embouti un contour à la pièce ("CONT+EMB"), et/ou

  . une fonction permettant d'ajouter à la pièce une autre pièce ayant les mêmes paramètres matière ("AJOUT-PIECE"), et/ou

. une fonction permettant de créer un décalage d'une portion de contour existant sans en modifier sa forme projetée ("DECALER"), et/ou

. une fonction permettant de créer un élément de liaison entre un contour à raccorder suivant le rayon d'un pli ("½ PLI"), et/ou

. une fonction permettant de créer des formes embouties ou assimilables à un embouti ("EMBOUTI"), et/ou

. une fonction permettant de créer automatiquement un pli inclus entre deux contours ("PLI IN CONT") ;

- un troisième type dit d'habillage ("HABILLER") de l'objet, telles que des opérations de cisaillage ("½ CISAILLE"), de marquage ("MARQUER"), de gravure ("GRAVURE"), de frappe ("FRAPPE"), de formation de soyé (cylindrique ("SOYE-CYL"), quelconque ("SOYE-QUELC") ou taraudé ("SOYE-TARAU")), de nervure ("NERVURE") ou d'incorporation sur un contour d'une forme quelconque paramétrée ou non (du type picots de soudure) ou formes obtenues par enfoncement, etc..., de formation de crevées ou de réalisation d'une forme quelconque sur un pli ("VOL QELC") du type renfort d'angle, etc...

Avantageusement, le procédé selon l'invention peut en outre comprendre :

- la mémorisation des caractéristiques matière de l'objet, c'est-à-dire des caractéristiques telles que le module d'élasticité, la dureté, le module de Young et l'épaisseur ;
- la mémorisation, pour chacun des susdits éléments caractéristiques, d'un mode de contrôle de faisabilité tenant compte desdites caractéristiques et des conditions d'obtention desdits éléments ;
- l'application dudit mode de contrôle pour chacun des susdits modes opératoires.

Selon une autre caractéristique de l'invention, les susdites fonctionnalités comprennent :

- des opérations de modification ("MODIF") de l'objet telles que des suppressions ("SUPPRIMER"), des séparations ("SEPARER"), des unifications ("UNIFIER"), des entailles ("ENTAILLER"), des bouchages ("BOUCHER") ou des corrections de forme ("CORRIGER") ; et/ou
- des opérations dites de manipulation ("MANIPULER") pouvant comprendre :
- des opérations de mise à plat des déformations de la pièce, ou de leur reconstitution, par étape ou en totalité, de manière à permettre la conception de l'outillage à partir de la forme du flan, et de la génération d'étapes intermédiaires, correspondant à la gamme d'outils ("FORMER-DEFORMER") ;

- des opérations permettant d'inhiber ou d'activer les habillages de l'objet ("HABILLER-DESHABILLER") ;
- des opérations permettant un changement d'élément pris comme référence pour les déformations ("PARTIE FIXE") ;
- des opérations permettant le changement de face de référence ("CHANGT-FACE") ;
- des opérations permettant le positionnement dans un plan de référence XOY de l'élément partie fixe ("AMENER XOY") ;
- des opérations permettant d'orienter un élément base de référence par rotation autour d'un axe OZ ("ROTA/OZ") ;
- des opérations permettant le calage de l'objet à l'endroit désiré par translation ("TRANSLATION").

A ces opérations relatives à la réalisation de l'objet il convient de rajouter des fonctions d'aide à la représentation, à savoir :

- un ensemble de fonctions de visualisation ("VISION") pouvant comprendre une fonction de visualisation de l'objet sous forme de contour ("VUE CONT"), une fonction permettant de visualiser tous les volumes de l'objet ("VUE VOL"), une fonction permettant de visualiser et créer une pièce dont tous ses éléments ont été unifiés ("VUE PIECE"), et une fonction permettant de créer une section de l'objet ("SECTION") ; et/ou
- un ensemble de fonctions de vérification ("VERIF") pouvant comprendre une fonction permettant d'éditer la structure de l'objet avec contrôle de la structure des données ("DECODER"), une fonction permettant d'éditer les différentes propriétés affectées à chacun des éléments de l'objet ("PROPRIETES"), une fonction de marquage de chaque élément de l'objet d'un numéro correspondant à son rang ("MARQUER"), une fonction de mesure sur l'objet permettant le calcul par exemple de son poids, de la puissance nécessaire à son obtention, de son centre de gravité et du moment d'inertie par rapport à un axe ("MESURES").

Ces fonctions peuvent être appelées par l'opérateur grâce à des "menus" affichés, de préférence, dans les zones périphériques de l'écran de visualisation non utilisées pour les représentations graphiques de l'objet.

Ces menus peuvent avantageusement utiliser, pour désigner les fonctions, les expressions mnémotechniques précédemment indiquées en majuscule entre guillemets.

Bien entendu, après avoir effectué la génération et la modélisation de l'objet, le processeur peut exécuter diverses opérations subséquentes telles que :

- l'étude de l'interaction des découpes entre éléments ;
- l'étude de l'interaction des déformations entre elles ;
- l'étude des gammes de fabrication ;
- l'édition de schémas grille ;
- l'obtention du flan en commande numérique (Pièces Proto) ;
- des études économiques pouvant comprendre la détermination du coût de l'objet, du coût de l'outillage utilisé, l'étude de la rentabilité du projet, etc...

Il peut également servir à l'étude et à la définition de l'outillage nécessaire à la réalisation de la pièce et, en particulier, l'étude et la définition des postes de découpe, de formage et la vérification fonctionnelle de ces postes.

Une fois l'étude de l'outillage conçue, le processeur peut servir à assurer l'usinage en commande numérique de cet outillage, soit directement par l'intermédiaire d'interfaces appropriées, soit par la programmation à partir de la géométrie des éléments de l'outillage à usiner.

Un mode d'exécution de l'invention sera décrit ci-après, à titre d'exemple non limitatif, avec référence aux dessins annexés, dans lesquels :

Les figures 1 et 2 sont des vues à l'écran permettant d'illustrer les opérations effectuées au cours de l'élaboration (création et modélisation) d'une pièce à partir d'un élément de base auquel on veut rajouter un contour lié par un élément du type PLI ;

Les figures 3 à 7 sont des vues de diverses pièces pouvant être conçues et modélisées au moyen du système selon l'invention ;

Les figures 8, 9, 10, 11, 12, 13, 14, 15, 16, 17 et 18 sont d'autres exemples d'exécution permettant d'illustrer les multiples possibilités du système selon l'invention.

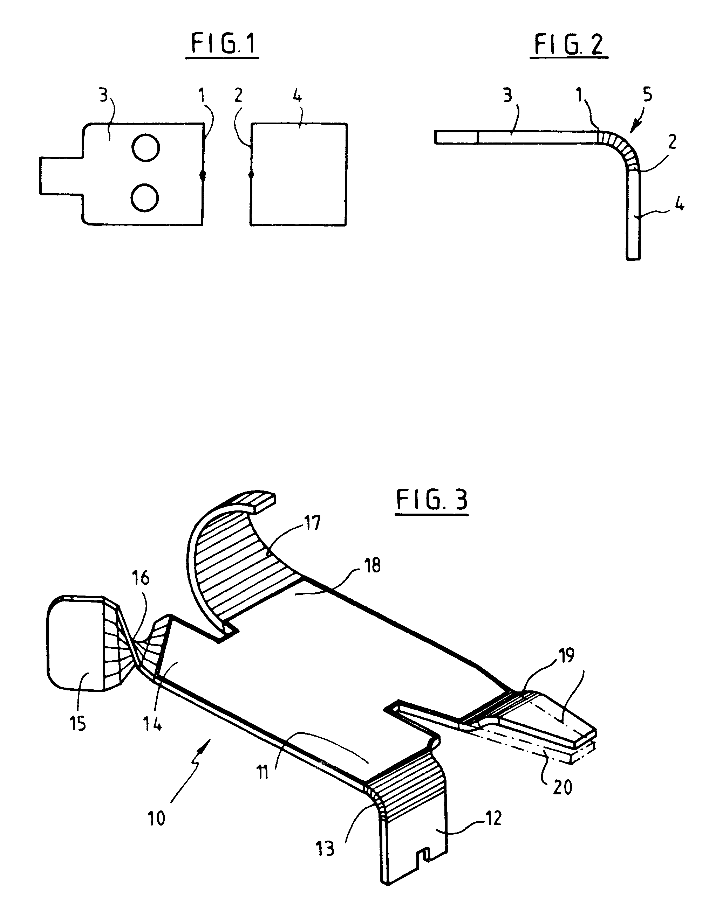

Avant de décrire plus en détail le mode d'exécution illustré sur les figures 1 et 2, il convient d'énoncer tout d'abord les conditions particulières de création à partir de la pièce de base 3, par adjonction d'un élément dont le contour 4 est à relier par un élément de type PLI, et qui sont les suivantes :

- les lignes de liaison 1, 2 de la pièce 3 et du contour 4 sont les éléments de départ et d'arrivée du pli 5 et devront être obligatoirement des segments de droite ;

- les points de liaison représenteront les références de mise en position du contour à relier et de la pièce ; s'ils ne sont pas spécifiés, le centre des segments sera pris par défaut ;
- le pli 5 généré correspondra à l'encombrement maximum des deux lignes de liaison 1, 2 ;
- l'angle maximum du pli 5 sera inférieur à 360° ;
- le contour 4 à relier pourra être créé dans un espace quelconque de coordonnées de référence (ox, oy, oz) ;
- la ligne de liaison 1 de la pièce 3 pourra appartenir à l'un des éléments créés par les fonctions proposées dans le menu ("EXTENSION-PIECE").

Dans ce cas d'espèce, les moyens de dialogue utilisés par l'opérateur pour activer les fonctions à réaliser par le processeur et pour effectuer à l'écran le tracé des objets consistent en un système à réticule pouvant comprendre deux molettes permettant de guider deux lignes croisées visibles à l'écran et dont les coordonnées sont déterminées par le processeur.

Comme précédemment mentionné, les menus définissant les fonctions (ou sous-menus) à exécuter se trouvent affichés à la périphérie de l'écran. Ces sous-menus peuvent être validés en vue de leur exécution, soit en centrant la réticule sur la fonction affichée, soit en indiquant cette fonction sur un clavier.

Initialement, l'opérateur appelle le menu ("EXTENSION PIECE") de sorte que les fonctions correspondant à ce menu se trouvent affichées sur la bordure supérieure de l'écran.

Pour une représentation en deux vues, l'écran se trouve divisé, par exemple, en deux par une ligne horizontale qui délimite dans ce cas les plans zoy et yox.

En outre, dans la bordure verticale droite sont affichés des sous-menus propres aux opérations de tracé à l'écran et permettant notamment l'introduction des paramètres tels que la valeur de la longueur d'un segment du rayon d'un cercle, la valeur d'un angle, etc...

La première étape que devra accomplir l'opérateur en vue de l'adjonction précédemment définie consiste à valider le sous-menu ("CONT + PLI"), cette tâche pouvant être effectuée avec ou sans effacement de l'écran.

L'opérateur effectue alors le rappel à l'écran du contour 4 à relier, dans le cas où celui-ci a déjà été modélisé ou, dans le cas contraire, il peut le créer à l'écran grâce aux fonctions graphiques qui restent accessibles après la validation du sous-menu susdit. Dans le cas où elle ne figure pas à l'écran, la pièce 3 est automatiquement recherchée et affichée à l'écran par un programme spécifique.

L'opérateur doit ensuite définir par rapport au plan de ce contour 4 le sens matière, c'est-à-dire le côté où doit s'étendre l'épaisseur de la matière. Cette opération est exécutée en amenant le réticule du côté choisi dans l'un des deux demi-espaces formé par le contour et en validant cette action.

Au cours de la phase suivante, l'opérateur procède à la définition des liaisons sur la pièce 3. A cet effet, il repère la ligne de liaison 3 avec le réticule, il définit un point de liaison sur la ligne ou bien, comme cela est possible dans cet exemple, il peut simplement valider cette action, de manière à ce que le centre du segment 1 soit pris par défaut.

Par une opération similaire, il procède à la définition des liaisons 2 sur le contour 4.

L'opérateur doit ensuite définir les caractéristiques du pli 5.

A cet effet, il indique la valeur de son rayon, de son angle puis le sens de l'angle par rapport à l'élément 3 à l'aide du curseur. Cette opération doit être ensuite validée.

L'objet est alors entièrement défini et l'opérateur peut obtenir sa représentation à l'écran par une visualisation volumique ou de ses contours de référence.

La figure 3 représente, en visualisation volumique, un objet 10 permettant d'illustrer une partie des possibilités offertes par les fonctions contenues dans le menu ("EXT-PIECE").

Cet objet 10 peut être réalisé par exemple à partir d'une pièce de base (représentée en traits épais) :
- on a relié à la zone 11, un contour 12 par un pli 13 ;
- on a relié à la zone 14, un contour 15 par une vrille 16 ;
- on a rajouté un pli 17 à la zone 18 ;
- on a réalisé un décalage 19 à la zone 20.

Il convient de noter que la réalisation de l'objet 10 ne fait pas intervenir toutes les fonctions du menu ("EXT PIECE"). Toutefois, il est facile d'imaginer une multiplicité de pièces utilisant tout ou partie de ces fonctions.

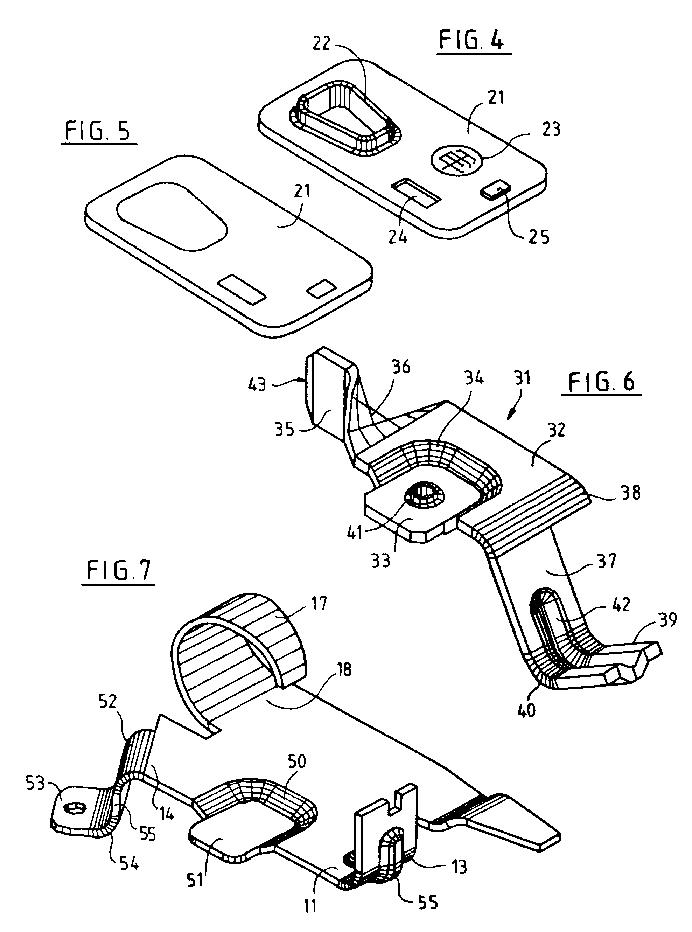

La figure 4 illustre, à titre d'exemple, certaines possibilités offertes par le menu ("HABILLER"). Sur cette figure est représentée une pièce 21, de forme rectangulaire, sur laquelle a été réalisé un soyé quelconque 22 ("SOYE QUELC"), une gravure 23 ("GRAVURE"), un marquage 24 ("MARQUER") et un demi-cisaillé 25 ("½ CISAILLE").

La figure 5 représente la pièce 21 déshabillée grâce à la fonction ("DESHABILLER") du menu ("MANIPULER").

La figure 6 représente une pièce 31 de forme plus complexe réalisée par une combinaison de fonctions contenues dans les menus ("EXT PIECE") et ("HABILLER").

Cette pièce est obtenue à partir d'un élément 32 auquel on a relié :
- un premier contour 33, par un embouti 34 ("CONT + EMB") ;
- un deuxième contour 35, par une vrille 36 ("CONT + VRI") ;
- un troisième contour 37, par un pli 38 ("CONT + PLI"), un quatrième contour 39 étant raccordé au contour 37 par un pli 40 ("CONT + PLI").

Par ailleurs, dans le contour 33 de cette pièce 31 est réalisé un soyé taraudé 41, tandis qu'une nervure 42 est formée dans les troisième et quatrième contours 37, 39 ainsi que dans le pli 40 une frappe 43 sur le contour 35.

Il va de soi qu'il est toujours possible de modifier une pièce réalisée ou en cours de réalisation. Ces modifications peuvent être effectuées selon le cas à l'aide des fonctions de menus ("EXT PIECE") et/ou du menu ("HABILLER") et/ou à l'aide des fonctions du menu ("MODIF").

La figure 7 illustre ces possibilités. Elle représente l'objet 10 de la figure 3 sur lequel on a apporté les modifications suivantes :
- l'adjonction sur la partie de référence, d'un contour 51 relié par un embouti 50 ("CONT + EMB") ;
- le remplacement de la vrille 16 et du contour 15 par un premier pli 52 relié à un contour 55 par un second pli 54 relié à un contour 53 ("SUPPRIMER" vrille 16, "EXTENSION PIECE", "CONT + PLI", "CONT + PLI") ;
- une correction de l'angle du pli 17 ("CORRIGER", angle du pli) ;
- l'inversion du sens du pli 13 et de son rayon ("CORRIGER", sens et rayon du pli) ;
- la réalisation d'une nervure 55 dans le pli 13 ("NERVURE").

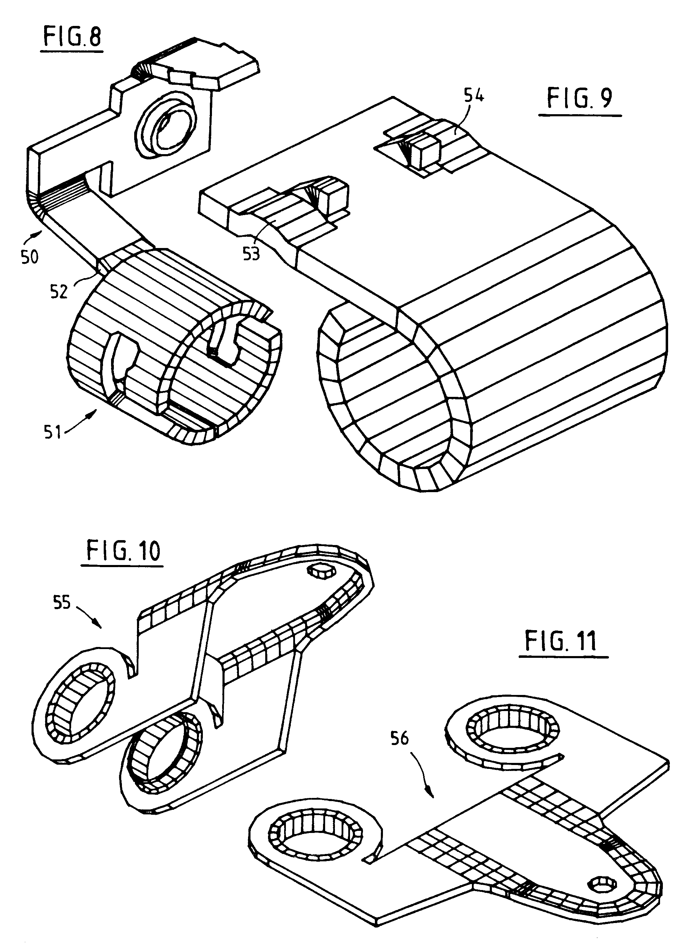

La figure 8 représente une pièce dont les deux éléments 50, 51 sont reliés entre eux par un demi-pli 52.

La figure 9 représente une pièce sur laquelle on a réalisé des formes quelconques 53, 54.

La figure 10 représente une pièce 55 comprenant un embouti et dont la forme développée 56 est indiquée sur la figure 11.

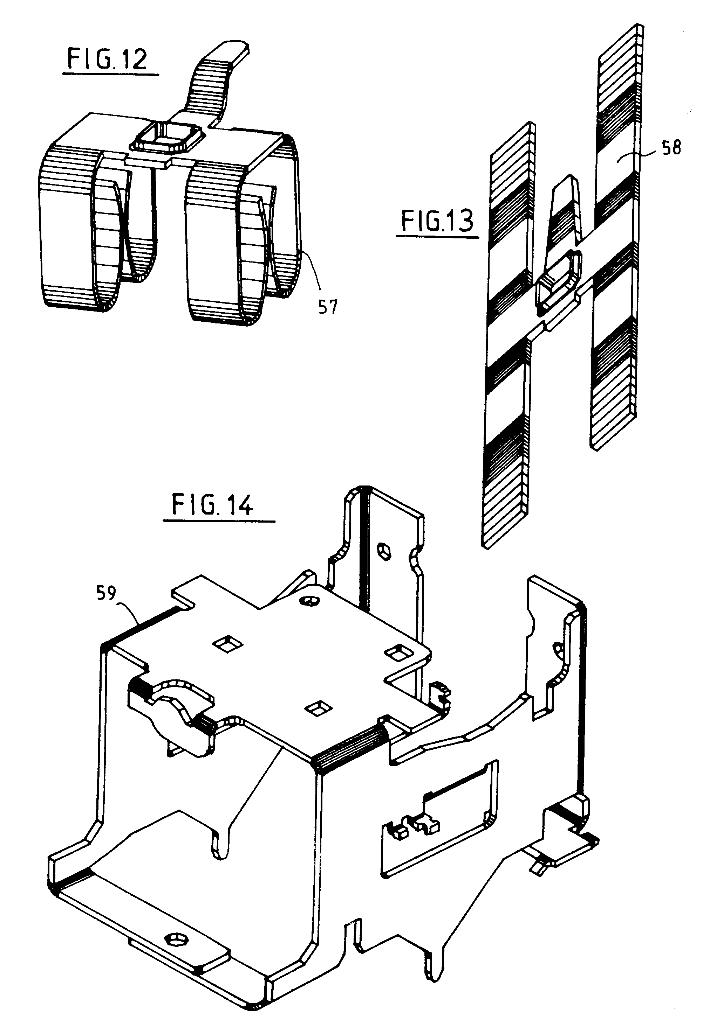

La figure 12 montre une pièce 57 pouvant servir de connecteur à pinces dont la forme développée 58, sensiblement en H, est représentée sur la figure 13.

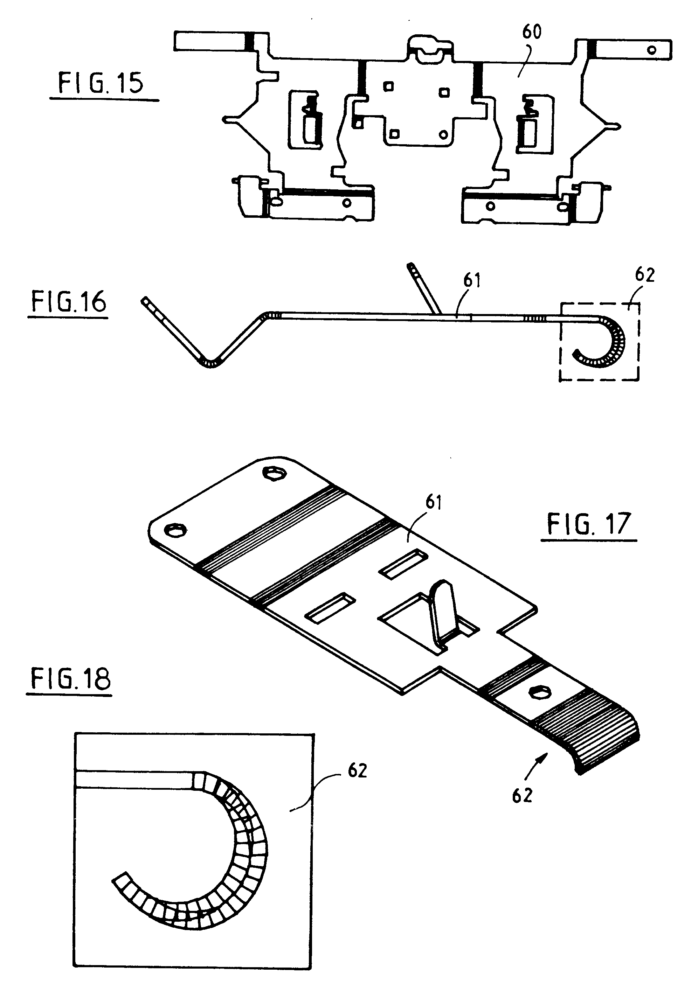

La figure 14 est une vue en perspective d'une pièce complexe 59 rentrant dans la structure d'un dispositif de commutation, la forme développée 60 de cette pièce étant représentée sur la figure 15.

La figure 16 représente le profil d'une pièce 61 possédant à l'une de ses extrémités un pli 62 formé en au moins deux étapes, la figure 17 montrant une étape intermédiaire de formation du pli 62.

Le calcul de ce pli 62 est illustré sur la figure 18, sur laquelle on a indiqué en superposition le pli 62 dans la position qu'il occupe sous contrainte et en position relâchée.

**Revendications**

1. Procédé pour l'aide à la conception et à l'industrialisation d'objets obtenus par découpe et déformation d'un métal en feuille, ce procédé faisant intervenir :
   - un processeur doté d'un logiciel de conception assistée à modélisation en trois dimensions,
   - un écran graphique sur lequel le processeur peut représenter un objet préalablement modélisé ou défini par l'opérateur,
   - des moyens de dialogue interactif entre le processeur et l'opérateur, qui permettent à ce dernier d'introduire des données en mémoire, d'activer des fonctions spécifiques à réaliser par le processeur, d'effectuer sur l'écran le tracé d'un objet et d'en mémoriser le modèle ainsi défini :
     - une base de données utilisable par le processeur et incluant un système de gestion et une mémoire dans laquelle peuvent être mémorisés le modèle et la structure de fonctionnalités relatives à des éléments spécifiques rentrant dans la composition d'un objet du type susdit, et
     - des moyens permettant l'élaboration progressive à l'écran de l'objet, par adjonctions successives d'extensions à un élément de base, ces moyens d'élaboration comportant des moyens de sélection de plusieurs modes opératoires différents,
   caractérisé en ce qu'il consiste :
   - à inclure préalablement dans la base de données le modèle et la structure des principaux types de déformations réalisables sur un métal en feuille en vue d'obtenir un objet du type susdit,
   - à définir l'élément de base ainsi que les adjonctions, en traçant à l'écran leurs contours en deux dimensions, à l'aide desdits moyens de dialogue ou en rappelant à l'écran ces contours dans le cas où il s'agit de contours dont le modèle est mémorisé dans le processeur,
   - à effectuer les extensions à l'aide d'au moins les modes opératoires suivants, sélectionnés par lesdits moyens de sélection et au terme de chacun desquels le processeur effectue la génération, la modélisation et la visualisation en trois dimensions de l'ensemble unifié comprenant la partie de l'objet déjà élaborée et la dernière extension réalisée :
     . un premier mode opératoire utilisable dans le cas où l'extension consiste en une adjonction sans déformation d'un élément, ce premier mode opératoire comprenant le tracé à l'écran par l'opérateur du contour de l'extension et la désignation de l'emplacement de sa liaison sur la partie de l'objet déjà élaborée ;
     . un deuxième mode opératoire utilisable dans le cas où l'extension consiste en un élément obtenu par déformation, ce deuxième mode opératoire comprenant la définition à l'écran par l'opérateur du contour de l'extension soit à l'emplacement où elle doit se trouver sur l'objet, le système prenant alors en compte cet emplacement, soit en dehors de l'objet, l'opérateur indiquant alors l'emplacement de la jonction entre les deux éléments, la sélection par l'opérateur du type de déformation à effectuer et le calcul, la modélisation et le tracé à l'écran par le processeur, à l'aide des susdits éléments spécifiques mémorisés, de ladite déformation ;
     . un troisième mode opératoire utilisable dans le cas où l'extension consiste en une adjonction d'un élément obtenu sans déformation devant être lié à l'objet par un élément obtenu par déformation, ce troisième mode opératoire comprenant le tracé à l'écran du contour de l'élément obtenu sans déformation, ce contour pouvant être trace ou rappelé par l'opérateur, l'indication ou la prise en compte par le système de son emplacement, la définition des paramètres de ladite liaison, la génération, la modélisation et la visualisation de ladite adjonction étant réalisées par le système à l'aide des susdites fonctionnalités correspondant à ladite liaison ;
     . un quatrième mode opératoire utilisable dans le cas où l'extension est un habillage, ce quatrième mode opératoire comprenant la sélection par l'opérateur du type de cet habillage, de sa position sur la pièce et de ses caractéristiques, les paramètres de cet habillage étant ensuite déterminés par le processeur.

2. Procédé selon la revendication 1, caractérisé en ce qu'il comprend :
   - la mémorisation des caractéristiques matière de l'objet ;
   - la mémorisation, pour chacun des susdits éléments caractéristiques, d'un mode de contrôle de faisabilité tenant compte desdites caractéristiques et des conditions d'obtention desdits éléments ;
   - l'application dudit mode de contrôle pour chacun des susdits modes opératoires.

3. Procédé selon la revendication 1, caractérisé en ce que les susdits modes opératoires sont exécutés au moyen de deux types fonctions, à savoir :
   - un premier type dit de "CREATION" comprenant notamment la fonction de création d'un premier élément de l'objet ou de l'objet lui-même si il ne comprend qu'un seul élément ("NEW-PIECE"), et/ou la fonction de création d'un objet symétrique d'un objet déjà modélisé ("PIECE-SYM"), et/ou la fonction de création par simple copie d'un objet déjà modélisé ("COPIE-PIECE"), et/ou la fonction de copie avec une matière présentant des caractéristiques différentes ("CHANGT-MAT"), et/ou la fonction de copie d'un objet déjà modélisé, avec une épaisseur différente ("CHANGT-EPS") ;
   - un second type dit d'extension ("EXTENSION PIECE") utilisant les susdits éléments identifiés et pouvant comprendre :
     . une fonction permettant d'ajouter un pli plus un contour à la pièce ("CONT + PLI"), et/ou
     . une fonction permettant d'ajouter une vrille plus un contour à la pièce ("CONT + VRI"), et/ou
     . une fonction permettant d'ajouter à la pièce un pli de forme rectangulaire ou trapézoïdale ("PLI"), et/ou
     . une fonction permettant d'ajouter à un objet une vrille de forme rectangulaire ou trapézoïdale ("VRILLE"), et/ou
     . une fonction permettant d'ajouter à un objet, un contour ("CONTOUR"), et/ou
     . une fonction permettant de relier par un embouti un contour à un objet ("CONT + EMB"), et/ou

     . une fonction permettant d'ajouter à un objet une autre pièce ayant les mêmes paramètres matière ("AJOUT-PIECE"), et/ou
     . une fonction permettant de créer un décalage d'une portion de contour existant sans en modifier sa forme projetée ("DECALER"), et/ou
     . une fonction permettant de créer un élément de liaison entre un contour à raccorder suivant le rayon d'un pli ("½ PLI"), et/ou
     . une fonction permettant de créer des formes embouties ou assimilables à un embouti ("EMBOUTI"), et/ou
     . une fonction permettant de créer automatiquement un pli inclus entre deux contours ("PLI IN CONT").
   - un troisième type dit d'habillage ("HABILLER") de l'objet, telles que des opérations de cisaillage ("½ CISAILLE"), de marquage ("MARQUER"), de gravure ("GRAVURE"), de frappe ("FRAPPE"), de formation de soyé (cylindrique ("SOYE-CYL"), quelconque ("SOYE-QUELC") ou taraudé ("SOYE-TARAU")), de nervure ("NERVURE") ou d'incorporation sur un contour d'une forme quelconque paramétrée ou non (du type picots de soudure) ou formes obtenues par enfoncement, de formation de crevées ou de réalisation d'une forme quelconque sur un pli ("VOL QELC") du type renfort d'angle.

4. Procédé selon l'une des revendications précédentes, caractérisé en ce que les susdites fonctionnalités comprennent :
   - des opérations de modification ("MODIF") de l'objet telles que des suppressions ("SUPPRIMER"), des séparations ("SEPARER"), des unifications ("UNIFIER"), des entailles ("ENTAILLER"), des bouchages ("BOUCHER") ou des corrections de forme ("CORRIGER") ;
   - des opérations dites de manipulation ("MANIPULER") pouvant comprendre :
     - des opérations de mise à plat des déformations de la pièce, ou de leur reconstitution, par étape ou en totalité, de manière à permettre la conception de l'outillage à partir de la forme du flan, et de la génération d'étapes intermédiaires, correspondant à la gamme d'outils ("FORMER-DEFORMER") ;

- des opérations permettant d'inhiber ou d'activer les habillages de l'objet ("HABILLER-DESHABILLER") ;
- des opérations permettant un changement d'élément pris comme référence pour les déformations ("PARTIE FIXE") ;
- des opérations permettant le changement de face de référence ("CHANGT-FACE") ;
- des opérations permettant le positionnement dans un plan de référence XOY de l'élément partie fixe ("AMENER XOY") ;
- des opérations permettant d'orienter un élément base de référence par rotation autour d'un axe OZ ("ROTA/OZ") ;
- des opérations permettant le calage de l'objet à l'endroit désiré par translation ("TRANSLATION").

5. Procédé selon l'une des revendications précédentes,
caractérisé en ce qu'il comprend la réalisation, par le processeur, des fonctions d'aide à la représentation, à savoir :
- un ensemble de fonctions de visualisation ("VISION") pouvant comprendre une fonction de visualisation de l'objet sous forme de contour ("VUE-CONT"), une fonction permettant de visualiser tous les volumes de l'objet ("VUE-VOL"), une fonction permettant de visualiser et créer une pièce dont tous les éléments ont été unifiés ("VUE-PIECE") et une fonction permettant de créer une section de l'objet ("SECTION") ; et/ou
- un ensemble de fonctions de vérification ("VERIF") pouvant comprendre une fonction permettant d'éditer la structure de l'objet avec contrôle de la structure des données des cases ("DECODER"), une fonction permettant d'éditer différentes propriétés affectées à chacun des éléments de l'objet ("PROPRIETES"), une fonction de marquage de chaque élément de l'objet d'un numéro correspondant à son rang ("MARQUER"), une fonction de mesure sur l'objet permettant le calcul par exemple du poids, de la puissance de la presse nécessaire à son obtention, de son centre de gravité, et du moment d'inertie par rapport à un axe ("MESURES").

6. Procédé selon l'une des revendications précédentes,
caractérisé en ce que les susdites fonctions sont appelées par l'opérateur grâce à des "menus" affichés dans les zones périphériques de l'écran de visualisation non utilisées par les représentations graphiques.

**Claims**

1. A system for assisting the design and industrialization of objects obtained by cutting out and deformation of sheet metals, this system comprising :
- a processor having an assisted design software for three dimensional modeling ;
- a graphic screen on which the processor may provide a graphic representation of an object previously modeled or defined by the operator ;
- interactive dialogue means between the processor and the designer which allow the designer to introduce data into the memory, to activate specific functions to be performed by the processor, to effect on the screen the plot of an object and to memorize the model thereof thus defined,
- a data basis usable by the processor and including a management system and a memory, in which are memorized the modeling and the structure of functionalities relative to specific elements entering into the construction of an object of said type, and
- means for progressively elaborating the object on the screen by successive additions of extensions to a basic element, said elaboration means comprising means for selecting several different operating modes, characterized in that it consists :
- in previously including in the data basis the model and the structure of the main types of deformations which may be effected on a sheet metal so as to obtain an object of the above-mentioned type,
- in defining the basic element as well as the additions by plotting on the screen their contours in two dimensions, by means of said dialogue means, or by recalling said contours to the screen when the model of said contours is stored in the processor,
- in making the extensions by means of at least the following operating modes, at the end of each of which the processor effects the generation, the modeling, and the display in three dimensions of the whole comprising the part of the object already elaborated and the latest extension made.

. A first operating mode usable in the case where the extension consists of an addition of an element, obtained without deformation, this first operating mode comprising the plotting on the screen by the operator of the contour of the extension and the indication of the position of its connection to the part of the object already elaborated.

. A second operating mode usable in the case where the extension consists of an element which will be obtained by deformation, this second operating mode comprising definition on the screen by the operator of the contour of the extension either at the position where it is to be located on the object, the system then taking this position into account, or outside of the object, the operator then indicating the position of the connection between the two elements, selection by the operator of the type of deformation to be effected and the calculation, modeling and plotting on the screen by the processor, by means of said memorized specific elements, of said deformation.

. A third operating mode usable in the case there the extension consists of an addition of an element obtained without deformation to be connected to the object by an element obtained by deformation, this third operating mode comprising plotting on the screen of the contour of the element obtained without deformation, this contour being able to be plotted or recalled by the operator, the indication or taking into account by the system of its position, the definition of the parameters of said connection, the generation, the modeling and the display of said addition being performed by the system, by means of said functionalities corresponding to said connection.

. A fourth operating mode usable in the case where the extension is a finish, this fourth operating mode comprising the selection by the operator of the type of this finish, its position on the piece and its characteristics, the parameters of this finish then being determined by the processor.

2. The system as claimed in claim 1, characterized in that it comprises :

- means for memorizing the material characteristics of the object,
- means for memorizing for each of said characteristic elements a method of feasability control taking into account said characteristics and the conditions for obtaining said elements,
- means for applying said method of control for each of said operating modes.

3. The system as claimed in claim 1, characterized in that said operating modes are executed by two types of functions, namely :
- a first type called "CREATION" comprising more especially the function of creation of a first element of the object or of the object itself if it only comprises a single element ("NEW-PIECE"), and/or the function of creation of a symmetrical object of an object already modeled ("PIECE-SYM") and/or the function of creation by simple copying of an object already modeled ("COPIE-PIECE"), and/or the function of copying with a material having different characteristics ("CHANGT-MAT"), and/or the function of copying an object already modeled, with a different thickness ("CHANGT-EPS") ;
- a second type called extension ("EXTENSION-PIECE") using said identified elements and possibly comprising :
  . a function for adding a bend plus a contour to the piece ("CONT + PLI") and/or
  . a function for adding a twist plus a contour to the piece ("CONT + VRI"), and/or
  . a function for adding to the piece a rectangular or trapezoidal shaped bend ("PLI"), and/or
  . a function for adding to the object a rectangular or trapezoidal shaped twist ("VRILLE"), and/or
  . a function for adding to the object a contour ("CONTOUR"), and/or
  . a function for connecting a contour to the object by a pressing ("CONT + EMB"), and/or
  . a function for adding to the object another piece having the same material parameters (" AJOUT-PIECE"), and/or
  . a function for creating an offset of an existing contour portion without modifying the projected form thereof ("DECALER"), and/or

. a function for creating a connection element between a contour to be connected along the radius of a bend ("½ PLI"), and/or

. a function for creating pressed shapes or shapes which may be likened to a pressing ("EMBOUTI"), and/or

. a function for automatically creating a bend included between two contours ("PLI IN CONT"),

- a third type called finish ("HABILLER") of the object, such as shearing operations, ("½ CISAILLE"), marking operations ("MARQUER"), etching operations ("GRAVURE"), stamping operations ("FRAPPE"), raised portion formation operations (cylindrical("SOYE-CYL"), of any form ("SOYE-QUELC"), or tapped ("SOYE-TARAU"), formation of ribs ("NERVURE") or incorporation on a contour of any shape parametered or not, of the welding stud type) or shapes obtained by recessing, by formation of punctures or for forming any shape on a bend ("VOL QELC") of the angle reinforcement type.

4. The system as claimed in one of the preceding claims, characterized in that said functionalities comprise :
   - operations for modifying ("MODIF") the object such as suppressions ("SUPPRIMER"), separations ("SEPARER"), unifications ("UNIFIER"), notches ("ENTAILLER"), plugging ("BOUCHER") or corrections of shape ("CORRIGER");
   - so called manipulation operations ("MANIPULER") which may comprise:
   - operations for flattening the deformations of the piece, or for reforming them, by steps or as a whole, so as to allow the tool to be designed from the shape of the blank, and for generating intermediate steps corresponding to the range of tools ("FORMER-DEFORMER");
   - operations for inhibiting or activating the finish of the object ("HABILLER-DESHABILLER");
   - operations for changing an element taken as reference for the deformations ("PARTIE FIXE");
   - operations for changing the reference face ("CHANGT-FACE");
   - operations for positioning the fixed part element in a reference plane XOY ("AMENER XOY");

- operations for orientating a basic reference element by rotation about an axis OZ ("ROTA/OZ");
- operations for fixing the object in the desired position by translation ("TRANSLATION").

5. The system as claimed in one of the preceding claims, characterized in that said processor is further adapted for performing functions of assisting the representation, namely :
   - an assembly of display functions ("VISION") which may comprise a function for displaying the object in the form of a contour ("VUE-CONT"), a function for displaying all the volumes of the object ("VUE-VOL"), a function for displaying and creating a piece in which all the elements are unified ("VUE-PIECE") and a function for creating a section of the object ("SECTION"); and/or
   - an assembly of verification functions ("VERIF") which may comprise a function for editing the structure of the object with control of the structure of the data of the boxes ("DECODER"), a function editing different properties assigned to each of the elements of the object ("PROPRIETES"), a function for marking each element of the object with a number corresponding to its rank ("MARQUER"), a function for measuring on the object for calculating for example the weight, the power of the press required for obtaining it, its center of gravity and the moment of inertia with respect to an axis ("MESURES").

6. The system as claimed in one of the preceding claims, characterized in that said functions are called up by the operator by means of "menus" displayed in the peripheral zone of the display screen not used by the graphic representations.

**Patentansprüche**

1. Verfahren zur Assistenz bei der Gestaltung und Industrialisierung von, durch Ausschnitt aus einer Metallfolie und deren Verformung gewonnenen Objekten, wobei in besagtem Verfahren mitwirken :
   - ein, mit einem Gestaltungshilfssoftware zur dreidimensionalen Formgebung ausgestatteter Prozessor,

- ein graphischer Schirm, auf dem der Prozessor ein vorher vom Bedienungsmann geformtes oder definiertes Objekt darstellen kann,
  - Mittel für den Dialog des Prozessors mit dem Bedienungsmann, die es letzterem ermöglichen, Daten einzuspeichern, spezifische Funktionen, die der Prozessor ausführen soll zu aktivieren, auf dem Schirm ein Objekt graphisch darzustellen und das so definierte Modell zu speichern,
  - eine vom Prozessor benutzbare, ein Steuersystem und einen Speicher aufweisende, Datenbank, in welcher das Modell und die Struktur von Funktionalitäten eingespeichert werden können, die sich auf spezifische, zum Aufbau eines Objektes des obengenannten Typs gehörende Elemente beziehen,
  - Mittel zur allmählichen Ausarbeitung des Objektes auf dem Schirm, indem einem Basismodell nacheinander Erweiterungen hinzugefügt werden, wobei besagte Mittel zur Ausarbeitung Mittel zur Auswahl mehrerer verschiedener Arbeitsverfahren aufweisen, dadurch gekennzeichnet, dass es darin besteht :
  - vorher in die Datenbank das Modell und die Struktur der verschiedenen auf eine Metallfolie anwendbaren Verformungsarten einzuspeisen, um ein Objekt des oben erwähnten Typs zu erhalten,
  - das Basiselement, sowie dessen Zusätze zu definieren, durch eine graphische, zweidimensionale Darstellung der Konturen auf dem Bildschirm, mittels der besagten Dialogmittel oder indem besagte Konturen auf den Schirm abgerufen werden, falls es sich um Konturen handelt, deren Modell im Prozessor gespeichert ist,
  - besagte Erweiterungen mittels wenigstens der folgenden, von besagten Auswahlmitteln ausgewählten, Arbeitsverfahren vorzunehmen, nach deren jeweiligem Ablauf der Prozessor die Erzeugung, die Formgebung und die dreidimensionale Darstellung des vereinten Ganzen, bestehend aus dem schon ausgearbeiteten Objektteil und der zuletzt ausgeführten Erweiterung vornimmt :

  . eines ersten Arbeitsverfahrens, das anwendbar ist, wenn die Erweiterung aus einem Zusatz ohne Verformung eines Elementes besteht und wobei zu diesem ersten Arbeitsverfahren die graphische Darstellung der Kontur der Erweiterung auf dem Schirm durch den Bedienungsmann gehört, sowie die Bestimmung des Ortes, wo sie an das schon ausgearbeitete Objektteil angefügt werden soll,
  . eines zweiten Arbeitsverfahrens, das anwendbar ist, wenn die Erweiterung aus einem durch Verformen erhaltenen Element besteht, wobei besagtes zweites Arbeitsverfahren die Definierung der Kontur der Erweiterung auf dem Bildschirm durch den Bedienungsmann einschliesst, entweder an der Stelle, wo sie sich am Objekt befinden soll, und das System dann dieser Stelle Rechnung trägt, oder ausserhalb des Objektes, und der Bedienungsmann dann die Verbindungsstelle zwischen den beiden Elementen angibt, die Auswahl durch den Bedienungsmann der auszuführenden Verformungsart und die Berechnung, die Formgebung und die graphische Darstellung der besagten Verformung auf dem Bildschirm durch den Prozessor, mit Hilfe der besagten gespeicherten spezifischen Elemente,
  . eines dritten Arbeitsverfahrens, das anwendbar ist, wenn die Erweiterung aus der Hinzufügung eines ohne Verformung erhaltenen Elementes besteht, das mit dem Objekt durch ein durch Verformen erhaltenes Element verbunden werden soll, wobei besagtes drittes Arbeitsverfahren die graphische Darstellung auf dem Bildschirm der Kontur des ohne Verformen erhaltenen Elementes einschliesst und besagte Kontur entweder vom Bedienungsmann graphisch dargestellt oder abgerufen werden kann, sowie die Bestimmung oder die Vormerkung des Ortes durch das System, die Definition der Kennwerte der besagten Verbindung, wobei die Erzeugung, Formgebung und Sichtbarmachung des besagten Zusatzes durch das System mit Hilfe der besagten, der Verbindung entsprechenden, Funktionalitäten erfolgt,

. eines vierten Arbeitsverfahrens, das anwendbar ist, wenn die Erweiterung eine Verkleidung ist, wobei besagtes viertes Arbeitsverfahren die Auswahl durch den Bedienungsmann des Typs dieser Verkleidung einschliesst, sowie deren Ort auf dem Teil und ihre Kennzeichen, und die Kennwerte dieser Verkleidung dann vom Prozessor bestimmt werden.

2. Verfahren nach Anspruch 1,
dadurch gekennzeichnet, dass es einschliesst :
   - die Speicherung der Materialkennzeichen des Objektes,
   - die Speicherung für jedes der obengenannten charakteristischen Elemente, eines Kontrollmodus der Ausführbarkeit, welcher besagten Kennzeichen und den Bedingungen zur Erhaltung der besagten Elemente Rechnung trägt,
   - die Anwendung des besagten Kontrollmodus auf jedes der besagten Arbeitsverfahren.

3. Verfahren nach Anspruch 1,
dadurch gekennzeichnet, dass besagte Arbeitsverfahren mittels zweier Funktionstypen ausgeführt werden, nämlich :
   . eines ersten Typs "CREATION" genannt, der insbesondere die Schaffung eines ersten Elementes des Objektes einschliesst oder des Objektes selbst, wenn dieses nur aus einem einzigen Element besteht ("NEW-PIECE") und/oder die Funktion der Schaffung eines Objektes, dass zu einem schon geformten Objekt symmetrisch ist ("PIECE-SYM") und/oder die Funktion der Schaffung durch einfache Kopie eines schon geformten Objektes ("COPIE-PIECE") und/oder die Funktion der Kopie, aber mit einem Material mit anderen Kennzeichen ("CHANGT-MAT") und/oder die Funktion der Kopie eines schon geformten Objektes, aber mit einer anderen Dikke (CHANGT-EPS"),
   . eines zweiten Typs, Erweiterung genannt ("EXTENSION PIECE"), welcher die obengenannten identifizierten Elemente verwendet und einschliessen kann :
   - eine Funktion, um dem Teil einen Falz und eine Kontur hinzuzufügen ("CONT + PLI") und/oder
   - eine Funktion, um dem Teil eine Spiraldrehung und eine Kontur hinzuzufügen ("CONT + VRI") und/oder

   - eine Funktion, um dem Teil einen rechteckigen oder trapezförmigen Falz hinzuzufügen ("PLI") und/oder
   - eine Funktion, um einem Objekt eine rechteckige oder trapeförmige Spiralverdrehung hinzuzufügen ("VRILLE") und/oder
   - eine Funktion, um dem Objekt eine Kontur hinzuzufügen ("CONTOUR") und/oder
   - eine Funktion, die es ermöglicht, eine Kontur mit einem Objekt durch Tiefen zur verbinden ("CONT + EMB") und/oder
   - eine Funktion, die es ermöglicht, einem Objekt ein Teil mit den gleichen Materialkennwerten hinzuzufügen ("AJOUT-PIECE") und/oder
   - eine Funktion, um einen vorhandenen Konturabschnitt zu verschieben, ohne deren entworfene Form zu verändern ("DECALER") und/oder
   - eine Funktion, die es ermöglicht, ein Verbindungselement zu schaffen, zwischen einer Kontur, die entlang dem Radius eines Falzes verbunden werden soll ("1/2 PLI") und/oder
   - eine Funktion, die es ermöglicht, getriebene oder vergleichbare Formen zu schaffen ("EMBOUTI") und/oder
   - eine Funktion, die es ermöglicht, automatisch einen zwischen zwei Konturen eingeschlossenen Falz zu schaffen ("PLI IN CONT") ;
   . eines dritten Typs, Verkleidung des Objektes genannt, ("HABILLER"), wie Scherverfahren ("1/2 CISAILLE"), Markierverfahren ("MARQUER"), Ätzverfahren ("GRAVURE"), Prägeverfahren ("FRAPPE"), zylindrische Durchgziehverfahren ("SOYE-CYL"), Durchziehverfahren willkürlicher Form ("SOYE-QUELC") oder mit Gewinde ("SOYE-TARAU"), Arbeitsverfahren zur Formierung von Rippen ("NERVURE") oder zur Einbeziehung in eine Kontor irgendeiner Form in Parameterdarstellung oder nicht (des Schweisstifttyps) oder durch Einbuchtung oder Schaffung von Innenborden erhaltene Formen oder durch Erzeugung irgendeiner Form auf einem Falz ("VOL QUELC") des Winkelversteifungstyps.

4. Verfahren nach einem der vorhergehenden Ansprüche,
dadurch gekennzeichnet, dass die obengenannten Funktionalitäten einschliessen :

- Arbeitsverfahren zur Abänderung des Objektes ("MODIF"), wie Beseitungen ("SUPPRIMER"), Trennungen ("SEPARER"), Vereinigungen ("UNIFIER"), Einkerbungen ("ENTAILLER"), Abdichtungen ("BOUCHER") oder Formenkorrektur ("CORRIGER"),
- Manipulation genannte Arbeitsverfahren ("MANIPULER"), die einschliessen können :
  . Arbeitsverfahren sur Flachlegung der Deformationen des Stückes oder deren Neuschaffung in Etappen oder als Ganzes, zur Ermöglichung der Gestaltung der Werkzeuge, ausgehend von der Form des Blanketts und zur Schaffung von Zwischenetappen, welche dem Werkzeugsatz entsprechen ("FORMER-DEFORMER"),
  . Arbeitsverfahren zur Verhinderung oder Aktivierung der Verkleidung des Objektes ("HABILLER-DESHABILLER"),
  . Arbeitsverfahren zur Auswechselung eines Elementes, das als Referenz für die Verformungen dient ("PARTIE FIXE"),
  . Arbeitsverfahren zur Änderung der Referenzfläche ("CHANGT-FACE"),
- Arbeitsverfahren, um das Element, welches als stationäres Teil dient in einer Referenzebene XOZ anzuordnen ("AMENER XOY"),
  . Arbeitverfahren, um ein Referenzbasiselement durch Drehung um eine Achse OZ zu orientieren ("ROTA/OZ"),
- Arbeitsverfahren, um das Objekt am gewählten Ort durch Querverschiebung zu blockieren ("TRANSLATION").

5. Verfahren nach einem der vorhergehenden Ansprüche,
dadurch gekennzeichnet, dass der Prozessor Funktionen, um bei der Darstellung zu assistieren ausübt, nämlich :
  - eine Reihe von Sichtbarmachungsfunktionen ("VISION"), zu denen die Sichtbarmachung des Objektes in Konturform ("VUE-CONT") gehören kann, eine Funktion, um alle Volumen des Objektes sichtbar zu machen ("VUE-VOL"), eine Funktion, um ein Stück sichtbar zu machen und zu schaffen, dessen Elemente alle vereint wurden ("VUE PIECE") und eine Funktion, um einen Schnitt des Objektes zu schaffen ("SECTION") ; und/oder
- eine Reihe von Kontrollfunktionen ("VERIF"), zu denen eine Funktion gehören kann, um die Struktur des Objektes auszudrucken und gleichzeitig die Struktur der Daten der Felder zu kontrollieren ("DECODER"), eine Funktion, um verschiedene, jedem Objektelement zugehörige Eigenschaften auszudrucken ("PROPRIETES"), eine Funktion, um jedes Objektelement mit einer seinem Rang entsprechenden Nummer zur markieren ("MARQUER"), eine Funktion, am Objekt eine Messung vorzunehmen, um zum Beispiel das Gewicht zu berechnen, sowie das Leistungsvermögen der zu seiner Erzeugung nötigen Presse, seinen Schwerpunkt und sein Trägheitsmoment im Verhältnis zu einer Achse ("MESURES").

6. Verfahren nach einem der vorhergehenden Ansprüche, dadurch gekennzeichnet, dass besagte Funktionen durch den Bedienungsmann abgerufen werden, durch "Menus", welche in den nicht von den graphischen Darstellungen benutzten Umfangszonen des Bildschirmes sichtbar sind.

FIG.1

FIG.2

FIG.3

FIG. 4

FIG. 5

FIG. 6

FIG. 7

FIG.8

FIG. 9

50

52

51

53

54

FIG. 10

55

FIG. 11

56

FIG.12

57

FIG.13

58

FIG.14

59

FIG.15

60

FIG.16

61

62

FIG. 17

61

FIG.18

62

62

62